# EUROPEAN PATENT APPLICATION

(11) **EP 3 385 516 A1**
(43) Date of publication of application: **10.10.2018**
(21) Application number: 17165596.2
(22) Date of filing: 07.04.2017
(51) Int. Cl.: F01N 3/20, F01N 3/28

(54) **SCR SYSTEM AND METHODÈ**

(71) Applicant: Perkins Engines Company Limited, Cambridgeshire PE1 5FQ (GB)
(72) Inventor: REID, Ben, Sussex Wharf, Shoreham-by-Sea, BN43 5PF (GB); HARGRAVE, Graham, Quorn, Loughborough, LE12 8HE (GB); GAYNOR, Paul, Loughborough, LE11 2HD (GB); SILVER, Ronald, Peoria, IL 61614 (US); LOCKYER, Thomas, Leicester, LE2 6DD (GB)
(74) Representative: Murgitroyd & Company

(57) **Abstract**

A selective catalytic reduction (SCR) system for treating exhaust gases in an exhaust passage is provided. The system comprises a first catalyst (30) for converting urea to ammonia, the first catalyst being located in the passage (10) and having an upstream face (31) and a downstream face (33). The upstream face (31) is at a right angle to an axial flow path (A) through the passage (10). The system further comprises a second catalyst (40) for converting NOx to nitrogen gas and water in the presence of ammonia, with the second catalyst being located in the passage (10) downstream of the first catalyst (30). A diesel exhaust fluid (DEF) dosing unit (50) is located upstream of the first catalyst (30). The dosing unit (50) comprises a nozzle (56) arranged so as to inject DEF directly onto the upstream face (31) of the first catalyst (30).

## Description

### Field of the Invention

The present invention relates to the field of internal combustion engines, and more specifically is an improved selective catalytic reduction (SCR) system and method for treating nitrogen oxides in diesel engine exhaust gases.

### Background of the Invention

SCR systems typically employ a SCR catalyst which converts nitrogen oxides (NOx) in the exhaust gas into nitrogen gas and water in the presence of ammonia. The ammonia is typically obtained by injecting aqueous urea (commonly known as diesel exhaust fluid, or DEF) into the exhaust stream, whereupon the urea undergoes a hydrolysis and/or thermolysis within the exhaust passage whereby ammonia is produced. The ammonia passes into the SCR catalyst where it reacts with the exhaust gas, wherein any nitrogen oxides (NOx) present in the exhaust gas are converted to nitrogen and water before passing out of the exhaust into the atmosphere.

To assist with, or speed up, the conversion of the DEF into ammonia it is known to employ an additional catalyst upstream of the SCR catalyst in the exhaust passage. This additional catalyst may be a hydrolysis catalyst, with the DEF injected into the exhaust stream flowing into the catalyst and undergoing a catalytic reaction whereby the DEF is converted to ammonia which then flows downstream into the SCR catalyst to effect the aforementioned conversion of the NOx. Alternatively, an impaction mixer may be employed upstream of the SCR catalyst, where the impaction mixer provides a surface for the evaporation, thermolysis and hydrolysis reactions to take place.

One disadvantage of using an impaction mixer upstream is that localised cooling of the mixer can occur at higher DEF dosing rates and/or lower exhaust temperatures and flow rates. Added to the limited surface area of the mixer this can lead to the accumulation of liquid on the mixer and subsequent inhibition of the urea to ammonia conversion reactions. Furthermore, this inhibition increases the likelihood of intermediate by-product reactions taking place, resulting in the formation of urea deposits both on the mixer and in the downstream exhaust pipework.

One solution to this problem has been proposed in US2009/0324453, which discloses a SCR system in which an upstream pyrolysis and/or hydrolysis catalyst has an upstream face which is at an angle of 20-70 degrees to the direct of axial flow. The purpose of this arrangement is to reduce the distance between a DEF injector and the upstream face of the catalyst and use catalysts to improve conversion of urea to ammonia. One disadvantage of such an arrangement is that the catalyst has to be created specifically for this purpose with the angled face, or else a conventional catalyst has to be cut to create the angled face. Either way, this increases the cost of manufacture. In addition, the angled face of the catalyst may extend the overall length of at least 30-50% of the cells within the catalyst, which can lead to an undesirable increase in back pressure within the exhaust system.

It is an aim of the present invention to obviate or mitigate one or more of the aforementioned disadvantages.

### Summary of the Invention

According to a first aspect of the present invention there is provided a selective catalytic reduction (SCR) system for treating exhaust gases in an exhaust passage, the system comprising:
a first catalyst for converting urea to ammonia, the first catalyst being located in the passage and having an upstream face and a downstream face, wherein the upstream face is at a right angle to an axial flow path through the passage;
a second catalyst for converting NOx to nitrogen gas and water in the presence of ammonia, the second catalyst being located in the passage downstream of the first catalyst; and
a diesel exhaust fluid (DEF) dosing unit located upstream of the first catalyst, the dosing unit comprising a nozzle arranged so as to inject DEF directly onto the upstream face of the first catalyst.

According to a second aspect of the invention there is provided a method of treating exhaust gases in an exhaust passage, the method comprising the steps of:
locating a first catalyst for converting urea to ammonia in the passage, the first catalyst having an upstream face and a downstream face, wherein the catalyst is located such that the upstream face is at a right angle to an axial flow path through the passage;
locating a second catalyst in the passage for converting NOx to nitrogen gas and water in the presence of ammonia, the second catalyst being located in the passage downstream of the first catalyst;
locating a diesel exhaust fluid (DEF) dosing unit upstream of the first catalyst, the dosing unit comprising a nozzle; and
injecting DEF from the nozzle directly onto the upstream face of the first catalyst.

### Brief Description of the Drawings

Preferred embodiments of the present invention will now be described, by way of example only, with reference to the following drawings:
Figure 1 is a sectional view of a first embodiment of a selective catalytic reduction system; and
Figure 2 is a sectional view of a second embodiment of a selective catalytic reduction system.

### Detailed Description of the Drawings

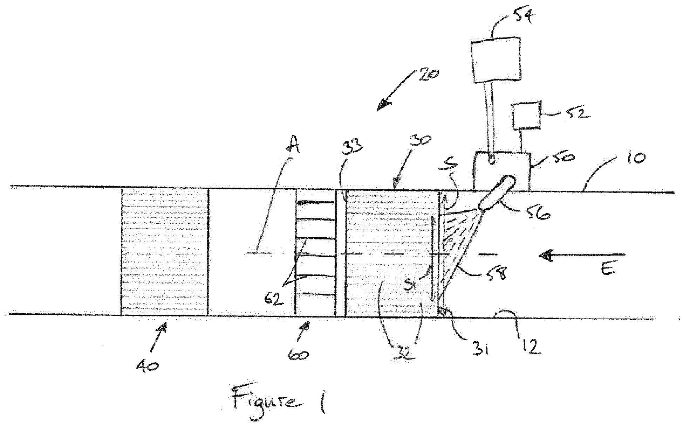

Figure 1 is a sectional view of the core components of a first embodiment of a selective catalytic reduction (SCR) system, which is located in an exhaust pipe or passage 10 of a vehicle. Exhaust gas flows in the direction shown by arrow E from a diesel engine of the vehicle towards an exhaust tailpipe (neither shown) and from there to atmosphere. The exhaust gas may first flow through a known diesel oxidation catalyst before reaching the components of the SCR system shown in Figure 1, and it may also flow through a known ammonia slip catalyst between the system and the tailpipe. However, neither of these components is shown here are they are not core components of the present SCR system.

The SCR system, generally designated 20, comprises a first catalyst 30 for converting urea to ammonia. The first catalyst 30 comprises a permeable substrate, which preferably has a plurality of cells 32 contained therein and extending along the length of the substrate. The substrate preferably has cell density of at least 50 cells per square inch. The permeable substrate may be a metallic substrate such as, for example, stainless steel or alternatively it may be a ceramic substrate such as, for example, cordierite. The catalyst substrate may be uncoated, whereby the substrate is effectively acting as an impaction device facilitating thermolysis and/or pyrolysis reactions within the urea. Alternatively, the substrate may be coated with a hydrolysis catalyst coating or washcoat of a known type so as to promote hydrolysis reactions within the urea.

The first catalyst 30 is located in the passage 10 and has an upstream face 31 and a downstream face 33. The upstream face 31 is substantially at right angles to an axial flow path A through the passage 10. In other words, at the location of the first catalyst 30 in the passage 10 the upstream face 31 is substantially perpendicular to an internal wall 12 of the passage.

The system 20 further comprises a second catalyst 40 for converting nitrogen oxides (NOx) to nitrogen gas and water in the presence of ammonia. The second catalyst 40 may be a SCR catalyst of a known type, and may include a particulate filter (not shown) immediately upstream thereof. The second catalyst 40 is located in the passage 10 downstream of the first catalyst 30.

Located upstream of the first catalyst 30 is a diesel exhaust fluid (DEF) dosing unit 50. The dosing unit 50 comprises a controller or ECU 52 for controlling the dosing rate of the unit, and is connected to a reservoir 54 containing a supply of DEF. The dosing unit also comprises a nozzle 56 connected to the reservoir 54, where the nozzle is arranged so as to inject DEF directly onto the upstream face 31 of the first catalyst 30. The term "directly" in this context means that a spray of DEF droplets 58 are injected from the nozzle 56 into the passage 10 in such a way as to impact or impinge upon the upstream face 31 of the first catalyst, as opposed to the droplets evaporating prior to reaching the first catalyst.

The system 20 may further comprise an exhaust mixer 60, which includes a plurality of flow-directing vanes 62 for generating turbulence and ensuring the thorough mixing of the exhaust gases and ammonia as the flow travels downstream into the second catalyst 40. The exhaust mixer 60 is located in the passage 10 downstream of the first catalyst 30, and is preferably close-coupled to the downstream face 33 of the first catalyst. By "close-coupled" it is meant that the mixer 60 is attached to the downstream face 33 or at least is located in close proximity (i.e. less than 100mm) to the downstream face.

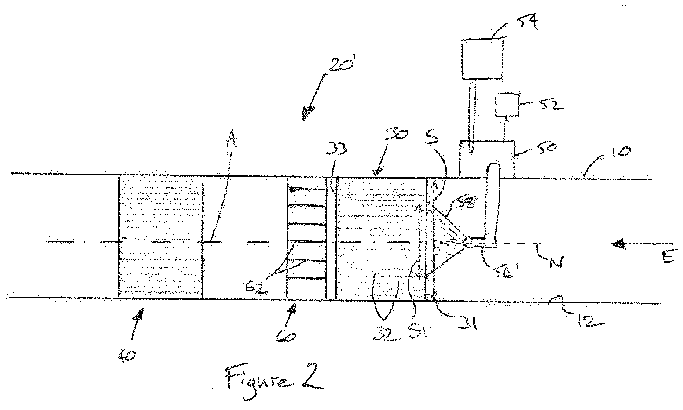

Figure 2 shows a sectional view of the core components of a second embodiment of a selective catalytic reduction (SCR) system, generally designated 20', which is located in an exhaust pipe or passage 10 of a vehicle. The second embodiment of the system shares the majority of the components of the first embodiment. These shared components also share the same reference numbers as used above and will not be described again here.

The difference between the first and second embodiments of the system relates to the positioning of the nozzle 56' of the DEF dosing unit 50. In this second embodiment the nozzle 56' is again arranged so as to inject DEF directly onto the upstream face 31 of the first catalyst 30. However, in this embodiment the nozzle 56' does this from a position in which it is substantially co-axial with the axial flow path A. In other words, the nozzle 56' has a central axis N which is substantially co-axial with the axial flow path A. Thus, the spray 58' of DEF droplets in the second embodiment leaves the nozzle 56' from a position directly in front of the upstream face 31 of the first catalyst, as opposed to from an angled position to the side of the first catalyst. The distance between a tip of the nozzle 56' and the upstream face 31 is proportional to a spray cone angle of the DEF leaving the nozzle tip. The tip of the nozzle is preferably 125-175mm from the upstream face, with a spray cone angle of 30-60°.

### Industrial Applicability

A method of treating exhaust gases in an exhaust passage will now be described, with reference to the components of the SCR systems shown in figures 1 and 2. The method comprises locating the first catalyst 30 for converting urea to ammonia in the passage 10, and locating the second catalyst 40 in the passage downstream of the first catalyst 30 for converting NOx to nitrogen gas and water in the presence of ammonia. The method may also include an initial step of coating the permeable substrate of the first catalyst with a hydrolysis coating or washcoat. The DEF dosing unit 50 is located upstream of the first catalyst, and may be located as shown in figure 2 whereby the DEF nozzle is substantially co-axial with the axial flow path A. Preferably, the nozzle 56, 56' is arranged such that the DEF spray 58,58' impinges upon a surface area S1 of the upstream face 31 of the first catalyst 30. The surface area S1 covered by the DEF spray 58,58' is preferably at least 50% of the total surface area S of the upstream face 31.

The DEF spray may 58,58' preferably comprises droplets having a Sauter mean diameter of less than 50 microns. The spray 58,58' is preferably formed as a cone, where the peak spray mass-flux impacting any point on the upstream face 31 does not exceed 2.5 times the average mass-flux impacting the upstream face 31, when measured over an area that includes 95% of the total impacting spray mass-flux.

As exhaust gas flows in direction E, the DEF dosing unit 50 will inject DEF from the nozzle 56,56' such that DEF droplets 58,58' are sprayed directly onto the upstream face 31 of the first catalyst 30. If the permeable substrate forming the first catalyst is not coated with a hydrolysis coating then the urea landing on the substrate will undergo a thermolysis or pyrolysis reaction such that the urea is converted into ammonia. If the substrate is coated with a hydrolysis coating then the urea will undergo a hydrolysis reaction whereby it is converted into ammonia.

The ammonia and exhaust gas exiting the downstream face 33 of the first catalyst then enter the exhaust mixer 60, where the vanes 62 of the mixer swirl and/or guide the flow so as to ensure a thorough mixing of the ammonia and exhaust gas before the flow enters the second catalyst 40. In the second catalyst any NOx present in the exhaust gas is converted to nitrogen gas and water in the presence of the ammonia. These harmless nitrogen and water components are then carried out of the exhaust tailpipe to the atmosphere.

By spraying the DEF directly onto the upstream face of the first catalyst the urea to ammonia conversion rate of the system is improved in comparison to systems in which the DEF is simply injected into the exhaust gas stream. It also reduces the chances of DEF deposits forming on internal surfaces of the exhaust passage upstream of the first catalyst. In the embodiments where the catalyst upstream face is acting as an impaction surface directly spraying the DEF onto that surface causes the DEF droplets to break up on impact, reducing the likelihood of any build-up of liquid on the catalyst and the undesirable cooling of those surfaces which may occur as a consequence. The desired evaporation of the DEF is further enhanced when the optional hydrolysis catalyst coating is applied to the substrate of the first catalyst.

Furthermore, performing this direct injection on an upstream catalyst face which is perpendicular to the passage and axial gas flow means that no additional manufacturing steps are required to produce a catalyst whose upstream face is angled relative to the axial flow. Using a catalyst whose upstream face is perpendicular also means that there is no additional back pressure generated in the passage due to the longer length of at least a portion of the cells in the catalyst.

Placing the optional flow mixer downstream of the first catalyst does not just ensure the mixing of the ammonia and exhaust gases. Additionally, the surfaces of the mixer also act as a secondary evaporation location for any DEF spray droplets which exit the downstream face of the first catalyst without having been evaporated.

Modifications and improvements may be incorporated without departing from the scope of the present invention as defined by the accompanying claims.

## Claims

1. A selective catalytic reduction (SCR) system for treating exhaust gases in an exhaust passage, the system comprising:
a first catalyst for converting urea to ammonia, the first catalyst being located in the passage and having an upstream face and a downstream face, wherein the upstream face is at a right angle to an axial flow path through the passage;
a second catalyst for converting NOx to nitrogen gas and water in the presence of ammonia, the second catalyst being located in the passage downstream of the first catalyst; and
a diesel exhaust fluid (DEF) dosing unit located upstream of the first catalyst, the dosing unit comprising a nozzle arranged so as to inject DEF directly onto the upstream face of the first catalyst.

2. The system of claim 1, wherein the first catalyst comprises a permeable metallic substrate.

3. The system of claim 1, wherein the first catalyst comprises a permeable ceramic substrate.

4. The system of either claim 2 or claim 3, wherein the substrate is coated with a hydrolysis catalyst.

5. The system of any preceding claim, wherein the nozzle is substantially co-axial with the axial flow path through the passage.

6. The system of any preceding claim, further comprising an exhaust gas mixer located in the passage downstream of the first catalyst.

7. The system of claim 6, wherein the exhaust gas mixer is close-coupled to the downstream face of the first catalyst.

8. A method of treating exhaust gases in an exhaust passage, the method comprising the steps of:
locating a first catalyst for converting urea to ammonia in the passage, the first catalyst having an upstream face and a downstream face, wherein the catalyst is located such that the upstream face is at a right angle to an axial flow path through the passage;
locating a second catalyst in the passage for converting NOx to nitrogen gas and water in the presence of ammonia, the second catalyst being located in the passage downstream of the first catalyst;
locating a diesel exhaust fluid (DEF) dosing unit upstream of the first catalyst, the dosing unit comprising a nozzle; and
injecting DEF from the nozzle directly onto the upstream face of the first catalyst.

9. The method of claim 8, wherein the first catalyst comprises a permeable metallic substrate.

10. The method of claim 8, wherein the first catalyst comprises a permeable ceramic substrate.

11. The method of either claim 9 or claim 10, further comprising the step of coating the substrate with a hydrolysis catalyst.

12. The method of any of claims 8 to 11, wherein the step of locating the dosing unit comprises locating the nozzle such that it is co-axial with the axial flow path through the passage.

13. The method of any of claims 8 to 12, wherein the upstream face of the first catalyst has a first surface area, and the nozzle injects the DEF such that a DEF spray impinges upon a second surface area of the upstream face which is at least 50% of the first surface area.

14. The method of any of claims 8 to 13, further comprising the step of locating an exhaust gas mixer in the passage downstream of the first catalyst.

15. The method of claim 14, wherein the step of locating the exhaust gas mixer in the passage comprises close-coupling the exhaust gas mixer to the downstream face of the first catalyst.
